# EUROPÄISCHE PATENTSCHRIFT

(11) **EP 0 672 598 B1**
(45) Veröffentlichungstag und Bekanntmachung des Hinweises auf die Patenterteilung: **04.06.1997**
(21) Anmeldenummer: 95103475.0
(22) Anmeldetag: 10.03.1995
(51) Int. Cl.: B65G 69/28

(54) **Überladebrücke für Rampen**
Loading bridge for ramps
Pont de chargement pour rampes

(30) Priorität: 18.03.1994 DE 4409345
(43) Veröffentlichungstag der Anmeldung: 20.09.1995
(73) Patentinhaber: Alten, Kurt, D-30974 Wennigsen (DE)
(72) Erfinder: Alten, Kurt, D-30974 Wennigsen (DE); Borchardt, Horst, D-30974 Wennigsen (DE)
(74) Vertreter: Depmeyer, Lothar

(56) Entgegenhaltungen:
- DE-C- 4 231 476
- DE-U- 9 302 168
- US-A- 4 662 021

## Beschreibung

Die Erfindung betrifft eine Überladebrücke für Rampen mit einer rampenseitig um eine waagerechte Achse verschwenkbaren Brückenplatte, die am vorderen Ende eine aus- und einfahrbare Verlängerung zur Abstützung der Brückenplatte auf der zu be- bzw. entladenden Plattform eines Fahrzeuges aufweist und mit einer oder mehreren ihrer Abstützung im Ruhezustand dienenden Stütze versehen ist, die um eine waagerechte Achse verschwenkbar und durch ein Verfahren der Verlängerung zur Einnahme der Ruhestellung mit ihrem unteren Ende in Richtung auf das rampenseitige Ende der Überladebrücke verschwenkbar sind (siehe zum Beispiel die DE-C-4 231 476).

Bei den bekannten Überladebrücken dieser Art wird deren Brückenplatte in Höhe des der Bewegung der Verlängerung dienenden Schlittens bzw. des Plattenkörpers unterfangen. Die sich dadurch ergebende Stützenlänge erfordert eine entsprechende Dimensionierung, um die erforderliche Knicksteifigkeit der Stütze zu erzielen. Insb. ist für die Stützen dann ein besonderer Aufwand erforderlich, wenn die Überladebrücke im Ruhezustand mit grösseren Lasten befahren wird und grosse Stützenlängen erforderlich sind.

Der Erfindung liegt die Aufgabe zugrunde, die eingangs erwähnten Überladebrücken so zu verbessern, dass die Belastung der Stützen erheblich verringert wird und demgemäss Stützen kleiner Dimensionierung befähigt werden, grössere Stützlasten zu übernehmen.

Zur Lösung dieser Aufgabe unterfangen erfindungsgemäss die Stützen mit ihrer oberen Stirnfläche ein sich nach unten in Richtung auf die Sohle der Rampenvertiefung erstreckendes Teil der Brückenplatte, und zudem sind sie mit einer sich nach oben zur Anlenkstelle erstreckenden, lediglich der Anlenkung dienenden Halterung versehen. Zweckmässigerweise werden dabei die Stützen so angeordnet, dass sie den die Unterzüge der Brückenplatte unterstützenden Querträger am vorderen Ende der Brückenplatte unterfangen, weil dieser Träger einerseits ausreichend steif ist und zudem die Brückenplatte nach unten hin abschliesst.

Dementsprechend können die Stützen vergleichsweise kurz und gedrungen gehalten werden, dennoch sind sie knicksteif genug, um grössere Lasten aufnehmen zu können. Diese Wirkung ist aber nur möglich, weil für die Anlenkung der Stützen eine Halterung vorgesehen ist, die nur die Aufgabe hat, die Stützen zu tragen, wenn sie sich in der Ruhestellung befinden. Die Halterung kann somit ein leichtes Gestänge sein, das bis an die Anlenkstelle reicht.

Weitere Einzelheiten der Erfindung werden anhand der Zeichnung erläutert, in der ein Ausführungsbeispiel der Erfindung dargestellt ist. Es zeigen :
Fig. 1 eine Überladebrücke für Rampen in der Ruhestellung, und zwar im Längsschnitt,
Fig. 2 eine Teildraufsicht auf die Brücke gemäss Fig. 1 und
Fig. 3 einen Schnitt nach der Linie III - III von Fig. 1.

Die Brückenplatte 1 ist rampenseitig um eine waagerechte Achse 2 an der Rampe 3 verschwenkbar. Sie schliesst im Ruhezustand mit ihrem Deckblech 4 mit der Oberfläche 5 der Rampe 3 mit der vorderen Kante 6 ab. In der Rampe 3 befindet sich eine der Grösse der Brückenplatte 1 entsprechende Ausnehmung 7, in die die Brückenplatte 1 eintauchen kann. Zum Verschwenken der Brückenplatte 1 werden nicht dargestellte Arbeitszylinder benötigt.

Zur Versteifung der Brückenplatte 1 dienen mehrere, längs zur Brücke verlaufende Unterzüge 8, die sich bis zum vorderen Ende der Brückenplatte 1 erstrecken, die seitlich durch im wesentlichen dreieckförmige bzw. trapezförmige Seitenbleche 1o abgeschlossen ist, welche zur Verankerung eines Querträgers 11 dienen, auf dem die Unterzüge 8 aufliegen.

Vorne an der Brückenplatte 1 befindet sich eine Verlängerung 12, deren Auflageteil 13 im ausgefahrenen Zustand der Verlängerung 12 auf das Fahrzeug aufgelegt werden kann. Nach Abschluss der Verladearbeiten wird die Verlängerung 12 eingezogen. Der Verschiebung der Verlängerung 12 dient ein bei 12' angezeigter Arbeitszylinder. Senkrecht zum Auflageteil 12 erstreckt sich ein Schild 14. Nach hinten geht das Auflageteil 13 in eine mit Längsschlitzen 15 ausgestattete Platte 16 über. Diese Schlitze werden von den Unterzügen 8 durchsetzt. Die zwischen den Längsschlitzen 15 verbleibenden Teile 21 der Platte 16 sind von Längsträgern 17 unterstützt, die die Platte 16 nach hinten hin überragen.

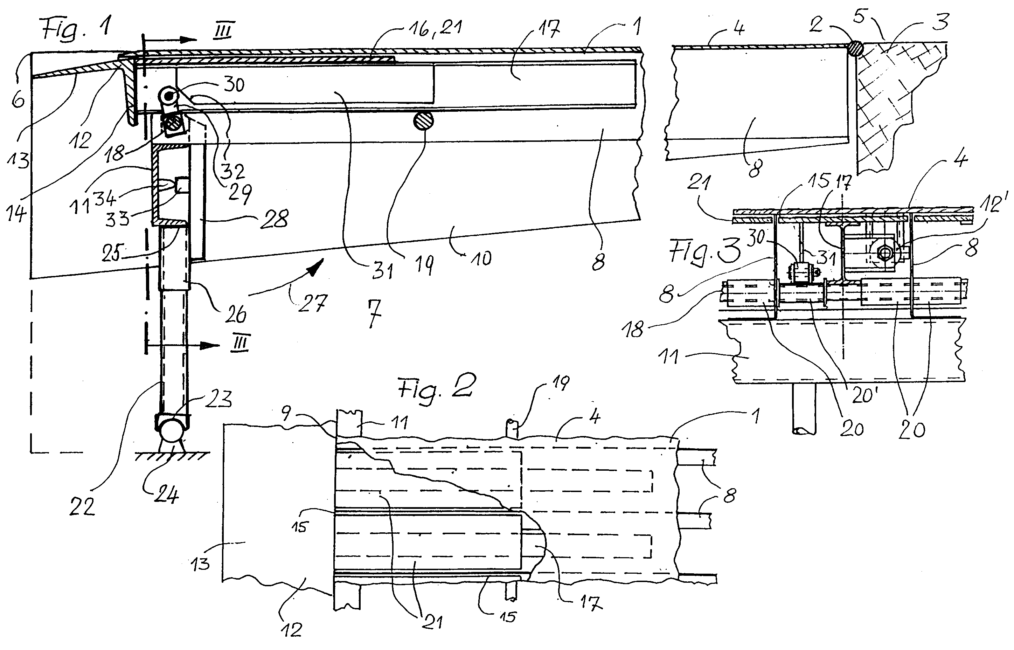

Die Längsträger 17 ruhen vorne auf einer verdrehbar angeordneten Welle 18, die sich auf dem Querträger 11 in nicht dargestellten Lagerböcken abstützt, aber auch mit ihren Enden an den Seitenblechen 10 gelagert sein kann. Wie aus Fig. 3 erkennbar ist, durchsetzt die Welle 18 auch die Unterzüge 8. Im hinteren Bereich stützen sich die Längsträger 17 auf einer ebenfalls die Unterzüge 8 durchsetzenden Querachse 19 ab. Dort und auch auf der Welle 18 sind Distanzhülsen 20 vorgesehen, die der Seitenführung der Längsträger 17 dienen.

Gemäss Fig. wird die Brückenplatte 1 in der Ruhestellung durch Stützen 22 gehalten, und zwar von einer Stütze 22 an einem und einer zweiten Stütze 22 am gegenüberliegenden Rand der Brückenplatte 1. Am unteren Ende liegen sie mit einem konkaven Fuss 23 auf einem Widerlager 24 in der Sohle der Ausnehmung 7 auf. Mit ihrer oberen Stirnfläche 25 unterfangen die Stützen 22 den Querträger 11. Damit wird die Überladebrücke beim Befahren des Deckbleches 4 gegen Absinken gesichert.

Die Stützen 22 sind vergleichsweise kurz, da sich der Querträger 11 von allen Bestandteilen der Brückenplatte 1 am weitesten nach unten in Richtung auf die vorerwähnte Sohle erstreckt. Es genügt ein Rohr als Stützenkörper.

Auf dem oberen Abschnitt der Stützen 22 ist eine Hülse 26 angeordnet, an der ein zur Halterung und zum Verschwenken der Stützen 22 in Richtung des Pfeiles 27 dienender Arm 28 angreift, welcher an einer Distanzhülse 20 befestigt ist, die drehfest mit der Welle 18 verbunden ist.

Etwa mittig unterhalb der Brückenplatte 1 ist ebenfalls eine drehfest mit der Welle 18 verbundene Distanzhülse 20' vorgesehen, an der ein sich zunächst nach oben erstreckender Stellarm 29 angreift, der am freien Ende mit einer Rolle 30 ausgestattet ist, und zwar in der Weise, dass eine Verschwenkung des Stellarmes 29 nach vorne zur Verlängerung 12 hin zu der Verschwenkung der Stützen 22 im Sinne des Pfeiles 27 führt.

Damit diese Verschwenkung automatisch mit dem Ausfahren der Verlängerung 12 geschieht, ist ein Abschnitt 21 mit einer nach unten gerichteten Kulisse 31 mit einer vorne gelegenen Auflaufschräge 32 vorgesehen. Wird nun die Verlängerung 12 ausgefahren, so bewirkt die Kulisse 31 eine Verschwenkung des Stellarmes 29. Damit erfolgt die gwünschte Verschwenkung der Stützen 22 im Sinne des Pfeiles 27; die Brückenplatte 1 kann nunmehr tief in die Ausnehmung 7 eintauchen, ohne durch die Stützen 22 gehindert zu werden.

Wichtig ist noch, dass die einmal nach hinten oben abgeschwenkten Stützen 22 bei einem Auftreffen auf evtl. Hindernisse innerhalb der Ausnehmung 7 weiter nach oben schwenken können, da die Kulisse 31 zwar ein Abklappen der Stützen 22 nach unten verhindert, eine weitere Verschwenkung der Stützen 22 im Sinne des Pfeiles 27 jedoch nicht verhindern kann. Das Gewicht der Stütze 22 zieht aber immer wieder die Rolle 30 gegen die Kulisse 31, sollte der Widerstand bzw. das Hindernis in der Ausnehmung nicht mehr wirken können.

Die Hülse 26 ermöglicht im übrigen eine Verstellung der Höhenlage der Stützen 22. In allen Hülsenstellungen soll jedoch die Last der Brückenplatte 1 nur von der Stütze 22 getragen werden; die Halterung 28 hat demgemäss nur die Aufgabe der Führung und Verschwenkung der Stütze 22, wenn diese verschwenkt werden soll.

Der Arm 28 ist noch mit einem Vorsprung 33 versehen, der beim Zurückschwenken der Stütze 22 auf einen elastischen Puffer 34 auftreffen kann.

Wird die Verlängerung 12 eingezogen, so schwenken die Stützen 22 gegen die Richtung des Pfeiles 27 aufgrund ihres Eigengewichtes in die Stellung gemäss Fig. 1 zurück.

Die Welle 18 hat also den besonderen Vorteil, dass sie einerseits die Betätigung der Stützenverschwenkung bewirkt und andererseits als Auflager für die Verlängerung 12 im vorderen Abschnitt dient. Insoweit erfüllt sie zwei Aufgaben.

Anstelle der Gestaltung des Fusses 23 und des Widerlagers 24 gemäss Fig. 1 kann auch ein anderer Formschluss verwendet werden, und zwar derart, dass hierdurch in der Ruhestellung der Brücke Unbefugte ausserstande sind, die Stütze 22 nach innen zu drücken, um hierdurch die Brückenplatte 1 verschwenken und in das Gebäude eindringen zu können. Da sich oberhalb der Brückenplatte 1 bei Nichtbetrieb ein geschlossenes Tor befindet, kann die Brückenplatte 1 nicht angehoben und damit kann auch der Formschluss am Fuss 23 nicht aufgehoben werden und die unbefugte Verschwenkung der Stütze nicht geschehen. Bei Inbetriebnahme der Brücke kann dann die Brückenplatte 1 um ein geringes Mass ohne weiteres angehoben und die Verschwenkung der Stütze 22 beim Ausfahren der Verlängerung 12 herbeigeführt werden.

## Patentansprüche

1. Überladebrücke für Rampen mit einer rampenseitig um eine waagerechte Achse (2) verschwenkbaren Brückenplatte (1), die am vorderen Ende eine ein- und ausfahrbare Verlängerung (12) zur Abstützung der Brückenplatte (1) auf der zu be- bzw. entladenden Plattform aufweist und mit einer, oder mehreren ihrer Abstützung im Ruhezustand dienenden Stützen (22) versehen ist, die durch ein Verfahren der Verlängerung zur Einnahme der Ruhestellung mit ihrem unteren Ende in Richtung auf das rampenseitige Ende der Brückenplatte (1) um eine waagerechte Achse verschwenkbar sind, dadurch gekennzeichnet, dass die Stützen (22) mit ihrer oberen Stirnfläche (25) ein sich nach unten in Richtung auf die Sohle der Rampenvertiefung erstreckendes Teil der Brückenplatte (1) unterfangen und mit einer sich nach oben zu ihrer Anlenkstelle erstreckenden, lediglich der Anlenkung dienenden Halterung (28) versehen sind.

2. Überladebrücke nach Anspruch 1, dadurch gekennzeichnet, dass die Stützen (22) einen die Unterzüge (8) der Brückenplatte (1) unterstützenden Querträger (11) im Bereich des vorderen Endes der Brückenplatte (1) unterfangen.

3. Überladebrücke nach Anspruch 1, dadurch gekennzeichnet, dass die Halterung (28) der Stützen (22) drehfest mit einer sich quer zur Überladebrücke erstreckenden Welle (18) verbunden ist, die an einer Stelle drehfest mit einem Stellarm (29) zur Beeinflussung durch die Verlängerung (12) versehen ist.

4. Überladebrücke nach Anspruch 1, dadurch gekennzeichnet, dass die Halterung (28) an einer auf die Stützen (22) aufgeschobenen Hülse (26) befestigt ist.

5. Überladebrücke nach Anspruch 1, dadurch gekennzeichnet, dass die Stützen (22) und die Hülse (26) zueinander verstellbar angeordnet sind.

6. Überladebrücke nach Anspruch 1, dadurch gekennzeichnet, dass der Halterung (28) ein elastischer Anschlag (33,34) zugeordnet ist.

7. Überladebrücke nach Anspruch 1, dadurch gekennzeichnet, dass die Stützen (22) rohrförmig gestaltet sind.

8. Überladebrücke nach Anspruch 2 und 3, dadurch gekennzeichnet, dass die Welle (18) zur verschwenkbaren Anordnung der Stützen (22) am Querträger (11) gelagert ist.

9. Überladebrücke nach Anspruch 1, dadurch gekennzeichnet, dass die Halterung (28) seitlich an den Stützen (22) befestigt ist und sich parallel zu den Stützen (22) erstreckt.

10. Überladebrücke nach Anspruch 1, dadurch gekennzeichnet, dass der Fuss der Stütze (22) und das dafür vorgesehene Widerlager (24) in der Wirkstellung der Stütze derart formschlüssig ineinandergreifen, dass eine Stützenverschwenkung nur nach einer Hubbewegung der Brückenplatte (1) mit Stütze (22) unter Aufhebung des Formschlusses durchführbar ist.

11. Überladebrücke nach Anspruch 10, dadurch gekennzeichnet, dass der Fuss (23) der Stützen (22) im wesentlichen konkav gestaltet ist und auf einem konvexen Widerlager (24) aufliegt.

12. Überladebrücke nach Anspruch 1, dadurch gekennzeichnet, daß die Brückenplatte (1) einen ihre Unterzüge (8) unterstützenden Querträger (11) im Bereich ihres vorderen Endes aufweist, der sich in der Wirkstellung der Stützen (22) auf deren obere Stirnfläche (25) abstützt, und daß die Stützen mit einer sich nach oben zu ihrer oberhalb des Querträgers (11) befindlichen Anlenkstelle erstreckenden, lediglich der Anlenkung dienenden Halterung (28) versehen sind.

## Claims

1. Transfer bridge for platforms, having a bridge plate (1) which is pivotable at its platform end about a horizontal axis (2), said bridge plate having, at its front end, a retractable and extendable extension member (12) for supporting the bridge plate (1) on the deck to be loaded or unloaded and being provided with one or more supports (22) which serve to support said bridge plate in its position of rest and are pivotable about a horizontal axis by moving the extension member in a direction towards the platform end of the bridge plate (1) so as to occupy the position of rest with its lower end, characterised in that the supports (22) support with their upper end face (25) a portion of the bridge plate (1) which extends downwardly in a direction towards the base of the platform indentation and are provided with a holder (28), which extends upwardly towards the pivotal mounting position of said bridge plate and is merely used for the pivotal movement.

2. Transfer bridge according to claim 1, characterised in that the supports (22) support a transverse carrier (11), which supports the beams (8) of the bridge plate (1), in the region of the front end of the bridge plate (1).

3. Transfer bridge according to claim 1, characterised in that the holder (28) of the supports (22) is non-rotatably connected to a shaft (18), which extends transversely relative to the transfer bridge and is provided non-rotatably at a location with an adjusting arm (29) so as to be affected by the extension member (12).

4. Transfer bridge according to claim 1, characterised in that the holder (28) is mounted on a sleeve (26), which is slipped over the supports (22).

5. Transfer bridge according to claim 1, characterised in that the supports (22) and the sleeve (26) are disposed so as to be displaceable relative to one another.

6. Transfer bridge according to claim 1, characterised in that a resilient stop member (33, 34) is associated with the holder (28).

7. Transfer bridge according to claim 1, characterised in that the supports (22) have a tubular configuration.

8. Transfer bridge according to claims 2 and 3, characterised in that the shaft (18) is mounted on the transverse carrier (11) for the pivotable disposition of the supports (22).

9. Transfer bridge according to claim 1, characterised in that the holder (28) is mounted laterally on the supports (22) and extends parallel to the supports (22).

10. Transfer bridge according to claim 1, characterised in that, when the support (22) is in its operative position, the base of the support and the abutment (24), provided therefor, engage in each other in such a form-locking manner that a pivotal movement of the support can only be effected after a lifting movement of the bridge plate (1) with support (22), thereby cancelling the form-locking arrangement.

11. Transfer bridge according to claim 10, characterised in that the base (23) of the supports (22) has a substantially concave configuration and lies on a convex abutment (24).

12. Transfer bridge according to claim 1, characterised in that the bridge plate (1) has a transverse carrier (11) in the region of its front end, said carrier supporting the beams (8) of said bridge plate and being supported on the upper end face (25) of the supports (22) when the latter are in their operative position, and in that the supports are provided with a holder (28), which extends upwardly to their pivotal mounting position, situated above the transverse carrier (11), and are merely used for the pivotal movement.

## Revendications

1. Niveleur de quai comportant un tablier (1) qui est monté basculant du côté du quai par rapport à un axe (2) horizontal, qui comporte à son extrémité avant une rallonge (12) que l'on peut rentrer et sortir pour appuyer le tablier (1) sur la plate-forme d'un véhicule automobile à charger ou à décharger et qui est munie d'un appui (22) ou de plusieurs appuis qui lui servent à s'appuyer au repos et qui, en déplaçant la rallonge pour la mettre en la position de repos, peuvent être basculés par rapport à un axe horizontal par leur extrémité inférieure en direction de l'extrémité du tablier (1) située du côté du quai, caractérisé en ce que les appuis (22) soutiennent par leur face (25) frontale supérieure une partie du tablier (1) s'étendant vers le bas en direction du fond de la fosse du quai et que, de plus, ils sont munis d'une fixation (28) qui s'étend vers le haut jusqu'à leur point d'articulation et qui ne sert qu'à l'articulation.

2. Niveleur de quai suivant la revendication 1, caractérisé en ce que les appuis (22) soutiennent dans la zone de l'extrémité avant du tablier (1) une traverse (11) soutenant les sous-poutres (8) du tablier (1).

3. Niveleur de quai suivant la revendication 1, caractérisé en ce que la fixation (28) des appuis (22) est solidaire en rotation d'un arbre (18) qui s'étend transversalement au niveleur de quai et qui est muni en un point, de manière solidaire en rotation, d'un bras (29) mobile servant à exercer une action par la rallonge (12).

4. Niveleur de quai suivant la revendication 1, caractérisé en ce que la fixation (28) est fixée à une douille (26) enfilée sur les appuis (22).

5. Niveleur de quai suivant la revendication 1, caractérisé en ce que les appuis (22) et la douille (26) sont montés de manière à pouvoir être déplacés l'un par rapport à l'autre.

6. Niveleur de quai suivant la revendication 1, caractérisé en ce qu'il est associé à la fixation (28) une butée (33, 34) élastique.

7. Niveleur de quai suivant la revendication 1, caractérisé en ce que les appuis (22) sont de forme tubulaire.

8. Niveleur de quai suivant la revendication 2 ou 3, caractérisé en ce que l'arbre (18) servant à monter basculants les appuis (22) est monté sur la traverse (11).

9. Niveleur de quai suivant la revendication 1, caractérisé en ce que la fixation (28) est fixée latéralement aux appuis (22) et s'étend parallèlement aux appuis (22).

10. Niveleur de quai suivant la revendication 1, caractérisé en ce que, en la position active, le pied de l'appui (22) et la butée prévue pour ce pied s'emmanchent avec complémentarité de forme de façon qu'il ne peut être effectué un basculement de l'appui qu'après un soulèvement du tablier comportant l'appui (22) qui supprime la complémentarité de forme.

11. Niveleur de quai suivant la revendication 10, caractérisé en ce que le pied (23) des appuis (22) est conformé de manière sensiblement concave et repose sur une butée (24) convexe.

12. Niveleur de quai suivant la revendication 1, caractérisé en ce que le tablier (1) comporte dans la région de son extrémité avant une traverse (11) qui soutient ses sous-poutres (8) et qui, en la position active des appuis (22), prend appui sur leur surface (25) frontale supérieure, et en ce que les appuis sont munis d'une fixation (28) qui s'étend vers le haut jusqu'à leur point d'articulation se trouvant au-dessus de la traverse (11) et qui ne sert qu'à l'articulation.
